Europäisches Patentamt

European Patent Office

Office européen des brevets

(19)

(11) **EP 0 940 248 B1**

(12) **FASCICULE DE BREVET EUROPEEN**

(45) Date de publication et mention
de la délivrance du brevet:
**30.05.2001  Bulletin 2001/22**

(51) Int Cl.[7]: **B32B 3/12**, G10K 11/16,
B64C 1/40

(21) Numéro de dépôt: **99400456.2**

(22) Date de dépôt: **25.02.1999**

(54) **Panneau insonorisant et procédé de réalisation**

Schalldämpfungsplatte und Herstellungsverfahren

Sound damping panel and method of manufacturing

(84) Etats contractants désignés:
**DE ES FR GB IT**

(30) Priorité: **26.02.1998  FR 9802346**

(43) Date de publication de la demande:
**08.09.1999  Bulletin 1999/36**

(73) Titulaires:
 • **SNECMA MOTEURS**
  **75015 Paris (FR)**
 • **S.A. ATECA**
  **F-82000 Montauban (FR)**
 • **Hispano-Suiza Aérostructures**
  **76700 Gonfreville l'Orcher (FR)**

(72) Inventeurs:
 • **Delverdier, Osmin Régis**
  **31830 Montastruc la Conseillère (FR)**
 • **Le Barazer, Bernard Louis**
  **76620 Le Havre (FR)**
 • **Vie, Philippe Jean Marcel**
  **31000 Toulouse (FR)**
 • **Gonidec, Patrick**
  **76290 Montivilliers (FR)**

 • **Lecossais, Eric**
  **76110 Virville (FR)**
 • **Julliard, Jacques Michel Albert**
  **77850 Hericy (FR)**
 • **Riou, Georges Jean Xavier**
  **77000 Melun (FR)**

(74) Mandataire: **Berrou, Paul**
  **Snecma Moteurs**
  **Propriété Intellectuelle,**
  **B.P. 81**
  **91003 Evry Cedex (FR)**

(56) Documents cités:
  **FR-A- 2 561 877**       **FR-A- 2 649 356**
  **GB-A- 1 387 692**       **GB-A- 2 256 395**
  **US-A- 4 667 768**

Remarques:
  Le dossier contient des informations techniques
  présentées postérieurement au dépôt de la
  demande et ne figurant pas dans le présent
  fascicule.

## Description

L'invention se rapporte aux structures sandwich, et plus particulièrement aux panneaux insonorisants à nids d'abeille dits "passifs" fonctionnant sur la base de résonateurs de Helmoltz accordés en quart de longueur d'onde.

Des normes de plus en plus restrictives imposent une réduction de l'émission sonore des avions à usage commercial, notamment au décollage et au voisinage des aéroports. Cette émission sonore peut atteindre 155 décibels au décollage, notamment contre les parois intérieures des nacelles entourant les turboréacteurs et les veines de gaz, et elle résulte d'excitations acoustiques d'origine aérodynamique provenant essentiellement des moteurs et des excitations aéroacoustiques générant des phénomènes vibro-acoustiques importants tant au niveau des structures que de l'habitacle. L'émission sonore se fait essentiellement dans une plage de fréquences assez large allant de 200 à 8000 Hz, et plus particulièrement entre 600 et 5000 Hz où la gêne est la plus importante. Toutefois, la tendance actuelle est à la généralisation des turboréacteurs dits à double flux et à grand taux de dilution permettant des réductions substantielles de la consommation de carburant, ces turboréacteurs présentent cependant une vitesse de rotation plus basse et par répercussion une émission sonore plus étendue vers les basses fréquences.

Dans ce contexte, les ensembliers et fabricants de pièces spécifiques aéronautiques sont à la recherche de traitements insonorisants permettant de réduire les niveaux acoustiques sans pénaliser d'autres aspects tels la résistance mécanique, la masse et l'encombrement. En particulier, la réduction de l'encombrement se traduit par des panneaux insonorisants moins épais, ce qui permet d'amincir les structures de l'avion, notamment les nacelles entourant les turboréacteurs, et par répercussion de réduire la traînée de l'avion et sa consommation de carburant.

Les panneaux insonorisants les plus performants connus en termes d'efficacité acoustique, de masse et d'encombrement sont constitués par une structure sandwich comportant une âme en nid d'abeilles dont les alvéoles sont agencées en résonateurs de Helmoltz. Le comportement du panneau peut être représenté par son impédance acoustique normalisée réduite par rapport à l'impédance de l'air ρc:

$$Z = R + j.X$$

Le terme réel R en exprime la composante résistive et doit être proche de l'unité pour une meilleure absorption du son aux moyennes fréquences. Le terme complexe X en exprime la composante réactive et doit être minimum pour éviter la réflexion sans absorption du son sur le fond du panneau insonorisant.

Il est connu de réaliser des panneaux insonorisants à double résonateur de Helmoltz comportant successivement une peau pleine 18, une âme en nid d'abeilles 12 dont les alvéoles sont divisées dans le sens de l'épaisseur en deux cavités par une cloison mince 16 en résine et perforée de part en part, ainsi qu'une peau poreuse communicant avec la source sonore. La cloison est positionnée pour accorder la résonance selon deux fréquences choisies, les molécules d'air se déplaçant alternativement d'une cavité à l'autre par les perforations de la cloison, une dissipation d'énergie s'effectuant par le laminage visqueux de l'air au niveau des perforations. Les perforations sont habituellement réalisées par faisceau laser, car elles doivent être de préférence de petite taille et en densité élevée. Il est toutefois connu que ces cloisons perforées présentent une non-linéarité importante avec des vitesses de déplacement élevées résultant des forts niveaux acoustiques. De ce fait, un panneau optimisé aux bas niveaux sonores, par exemple à 120 décibels, verra ses performances se dégrader aux hauts niveaux sonores, par exemple à 155 décibels, et réciproquement. Par ailleurs, l'optimisation d'un tel panneau insonorisant conduit à un rapport entre la surface totale des perforations et la surface de la cloison, appelé "taux de perforation" ou "porosité" qui est de l'ordre de 2% à 5%. De ce fait, la vitesse des molécules de l'air augmente fortement en traversant la cloison, ce qui augmente le comportement non linéaire de la cloison.

Il est connu aussi de réaliser des panneaux insonorisants du même type dans lequel la cloison est constituée par un tissu de fils métalliques 14 pris en sandwich entre deux couches de nid d'abeille. Cette cloison offrant conjointement une meilleure linéarité combinée à une porosité plus importante, soit de l'ordre de 20%, cette porosité provoquant ainsi une moindre augmentation de la vitesse des molécules d'air traversant la cloison et améliorant de ce fait la linéarité. Un tel panneau présente cependant une faiblesse au délaminage entre les deux couches de nid d'abeille et le tissu. On comprend que la division du nid d'abeille en deux couches ne répond qu'à un impératif de faisabilité et de coût.

Il est connu aussi de réaliser des panneaux insonorisants constitués par une charge absorbante prise en sandwich entre deux peaux dont l'une au moins est poreuse. La charge peut être réalisée avec de la fibre, avec une mousse à pores ouverts et plus récemment avec des microbilles, les microbilles creuses à paroi poreuse semblant donner les meilleurs résultats. Cependant, de tels panneaux doivent avoir une épaisseur se rapprochant sensiblement du quart de la longueur d'onde du son à la fréquence la plus basse à absorber, ce qui conduirait en aéronautique à un encombrement prohibitif. De plus, ces panneaux seraient très lourds, car leur efficacité dépend de la masse volumique de la charge absorbante.

Un premier problème est de proposer un panneau insonorisant conciliant des impératifs élevés en termes d'insonorisation et de résistance mécanique, ceci sans en pénaliser la masse et l'encombrement, de tels panneaux insonorisants devant être susceptibles d'être réalisés industriellement.

Un second problème est de proposer un panneau insonorisant présentant une atténuation améliorée aux basses fréquences à épaisseur constante, ou réciproquement une épaisseur réduite à atténuation constante aux basses fréquences.

Un troisième problème est de proposer un procédé de réalisation de tels panneaux insonorisants.

L'invention propose un panneau insonorisant plus particulièrement mais non exclusivement destiné à l'insonorisation des turboréacteurs et des structures d'avion, ledit panneau insonorisant combinant des performances élevées en termes d'efficacité acoustique ou d'atténuation sonore, de résistance mécanique, de masse et d'encombrement, ledit panneau insonorisant étant défini à la revendication 1.

On comprend que l'ensemble des microbilles constituant la cloison forme une masse malléable tant que le liant n'a pas pris, c'est à dire n'assure pas encore une fonction effective de liaison. De ce fait, les cloisons peuvent être formées en tout ou en partie à l'intérieur des alvéoles du nid d'abeille, ce nid d'abeille pouvant en conséquence être en une seule couche. Lorsque les microbilles sont liées entre elles, on obtient des cloisons solides adhérant par leurs bords aux parois du nid d'abeille. En d'autres termes, ces cloisons conservent alors leur forme et leur position dans les alvéoles du nid d'abeille. On comprend enfin que du fait que les microbilles sont liées par leurs points de contact, il subsiste entre lesdites microbilles des espaces constituant une multitude de passages ou conduits reliant entre elles les cavités, la porosité des microbilles constituant des compléments à ces passages.

Un premier avantage de l'invention est que les cloisons autorisent une forte dissipation de l'énergie sonore, par laminage visqueux de l'air, permettant d'ajuster simplement le terme résistif R à sa valeur optimale. Ceci peut se comprendre par le fait que les microbilles utilisées qui sont sensiblement sphériques par définition, déterminent des passages ou conduits dont les surfaces latérales sont importantes en regard de la section moyenne desdits conduits, lesdites surfaces produisant un laminage visqueux important de l'air. Ce phénomène est augmenté par le fait que le trajet des molécules d'air à travers la cloison est sinueux, ce qui augmente le chemin moyen parcouru, alors que l'épaisseur de la cloison peut être augmentée à volonté. Ce phénomène est encore augmenté par le fait que les surfaces latérales des conduits ainsi constitués de portions de sphères géométriques convexes provoquent une diffusion importante des ondes acoustiques à l'intérieur des passages constitués en réseaux entre les microbilles.

Un autre avantage est que la perméabilité de la cloison reste bonne, ce qui permet de réduire le terme réactif X. Cette bonne perméabilité peut s'expliquer essentiellement par la porosité élevée des cloisons, typiquement de 20% à 43%. Ceci étant constaté, on comprend que l'on peut augmenter l'épaisseur de la cloison à une valeur au moins égale à 15% de l'épaisseur du nid d'abeilles. Ceci a pour effet d'augmenter le chemin moyen parcouru par l'air entre les deux cavités, en conservant cependant une bonne perméabilité de la cloison et donc une bonne efficacité de celle-ci, et pour résultat d'améliorer l'atténuation du son aux basses fréquences par abaissement des modes de résonance. L'optimum se situe entre 30% et 35%, les performances du panneau insonorisant se dégradant au delà.

Un autre avantage est que la linéarité avec le niveau sonore du panneau insonorisant est bonne, les propriétés dudit panneau restant sensiblement constantes. Ceci peut s'expliquer, mais en partie seulement, par la bonne perméabilité de la cloison qui permet une moindre augmentation de la vitesse des molécules d'air traversant la paroi. Pour le reste, il faut admettre que l'emploi de microbilles permet d'obtenir des passages aux propriétés aérodynamiques élevées, c'est à dire permettant un bon écoulement de l'air, la porosité des microbilles y contribuant aussi probablement. Des mesures ont montré que pour des vitesses d'écoulement des molécules d'air passant de 0,2 à 2m/s (mètres par seconde), le terme résistif d'une cloison selon l'invention est multiplié par un coefficient allant de 1,1 à 1,3 seulement. Par comparaison, le terme résistif d'une cloison perforée est multiplié sensiblement par 10.

Un avantage encore est que les panneaux insonorisants selon l'invention présentent, à épaisseur identique, une efficacité améliorée aux basses fréquences. Ceci pourrait s'expliquer par le fait que le parcours de l'air entre les deux cavités résonantes est allongé par la possibilité de réaliser des cloisons épaisses et par le trajet sinueux de l'air à l'intérieur desdites cloisons, ce qui permet d'accroître l'effet réactif de la cavité et de déplacer l'accord vers les basses fréquences.

Avantageusement, la masse de microbilles étant constituée d'un mélange de lots de microbilles de diamètres homogènes, c'est à dire que lesdites microbilles ont à l'intérieur d'un lot des diamètres sensiblement égaux aux tolérances de fabrication près, l'épaisseur de la cloison a une épaisseur au moins égale à 10 fois le diamètre moyen des microbilles du lot de billes ayant le plus faible diamètre. Ceci a pour effet d'augmenter les surfaces latérales des passages, mais sans pénaliser sensiblement la perméabilité la cloison, et pour résultat d'améliorer la dissipation par laminage visqueux de l'air dans les cloisons et par répercussion l'atténuation apportée par le panneau insonorisant. Par le terme homogène, il faut comprendre que les microbilles ont des diamètres sensiblement égaux, aux tolérances de fabrication près.

Dans un mode préféré de réalisation, les microbilles constituant la cloison ont des diamètres s'étendant de 0,2 à 1mm, l'optimum correspondant à une plage de 0,3 à 0,5mm, et l'épaisseur de la cloison est au moins égale à 10 fois le diamètre moyen de l'ensemble des microbilles.

Typiquement, un panneau insonorisant classique à deux cavités résonnantes par alvéole présente un coefficient d'atténuation sensiblement égal à 0,72 à 1000Hz et à 0,41 à 500Hz pour une épaisseur de 40mm, alors qu'un panneau insonorisant de même épaisseur selon l'invention présente un coefficient d'atténuation sensiblement égal à 0,85 à 1000Hz et à 0,72 à 500Hz, la cloison ayant dans ce cas une épaisseur de 13mm de microbilles. Réciproquement, l'invention permet de réduire l'épaisseur des panneaux insonorisants pour une atténuation spécifiée aux basses fréquences. Pour mémoire, un coefficient d'atténuation théorique égal à 1 correspondant à l'absorption totale de l'énergie sonore.

Un avantage encore est que les panneaux insonorisants selon l'invention présentent une bande d'atténuation améliorée par rapport aux panneaux classiques à deux cavités résonantes. Le panneau classique de l'exemple précédent présente une bande d'atténuation s'étendant sensiblement de 1200Hz à 5300Hz, soit 2,1 octaves, pour un coefficient d'atténuation de 0,8. Pour ce même coefficient d'atténuation, le panneau de l'exemple précédent selon l'invention présente une bande d'atténuation s'étendant de 500Hz à 3500Hz, soit 2,6 octaves.

L'invention propose aussi. deux formes de procédé de réalisation d'un tel panneau insonorisant qui sont définies aux revendications 4 et 8.

Le liant doit avoir une viscosité dynamique allant de 0,5 à 3 Pa.s (Pascals.secondes) à 25°C et il est dosé à raison de 0,1 à 1 g/cm$^3$. On constate qu'un tel liant très fluide se localise aux points de contact des microbilles entre elles et avec les cloisons du nid d'abeille, en préservant la porosité naturelle des parois desdites microbilles. Avantageusement, on préférera un dosage de liant au plus égal à 0,3 g/cm$^3$, afin de mieux dégager les espaces laissés entre les microbilles.

Lorsque le panneau insonorisant est courbe, on utilisera des microbilles en élastomère ou en tout autre matériau présentant une capacité de déformation limitée mais suffisante. On réalisera les cloisons dans les alvéoles du nid d'abeille à plat, et on cintrera ensuite le nid d'abeille à la forme à obtenir après la prise du liant et préalablement à l'application et à la liaison des peaux sur le nid d'abeille. On comprend que cette disposition a pour effet de rendre les microbilles déformables, et pour résultat de permettre le cambrage du nid d'abeille sans détérioration des cloisons, du fait que lesdites cloisons peuvent suivre les légères variations dimensionnelles des alvéoles qui résultent du cambrage.

Lorsque le panneau insonorisant est courbe, on utilisera dans une autre forme de réalisation un liant élastomère ou en tout autre matériau présentant une capacité de déformation limitée mais suffisante, et on cintrera le nid d'abeille à la forme à obtenir, ceci après la prise du liant et préalablement à l'application et à la liaison des peaux sur le nid d'abeille. On comprend que cette disposition a pour effet de rendre déformables les liaisons entre microbilles et entre les microbilles et les parois du nid d'abeille, et pour résultat également de permettre le cambrage du nid d'abeille sans détérioration des cloisons, du fait que lesdites cloisons peuvent suivre les légères variations dimensionnelles des alvéoles qui résultent du cambrage.

Un support cireux convenable sera un matériau tel la paraffine ou la cire solide à la température ambiante mais avec un point de fusion bas, par exemple compris entre 50°C et 90°C.

Avantageusement, le support cireux est disposé sur un lit d'eau par sa surface opposée à la surface de formage. Lors du pressage, le support cireux est traversé complètement par le nid d'abeille jusqu'à ce qu'il arrive en retrait d'au moins 2mm à l'intérieur du nid d'abeille. Une telle disposition a pour effet de constituer un ménisque concave le long de l'angle formé par les parois du nid d'abeille et la surface de la couche cireuse opposée à la surface de formage, et pour résultat d'accélérer l'expulsion par fusion de la couche cireuse avant que la matière de ladite couche cireuse n'ait pénétré par capillarité dans les cloisons.

L'invention sera mieux comprise au vu d'exemples détaillés de réalisation et des figures associées.

La figure 1 illustre la structure d'un panneau insonorisant selon l'invention par une vue en coupe dans le sens de l'épaisseur. La figure 2 illustre par une vue agrandie en coupe la structure des cloisons selon l'invention.

La figure 3 illustre un procédé de réalisation des panneaux insonorisants selon l'invention.

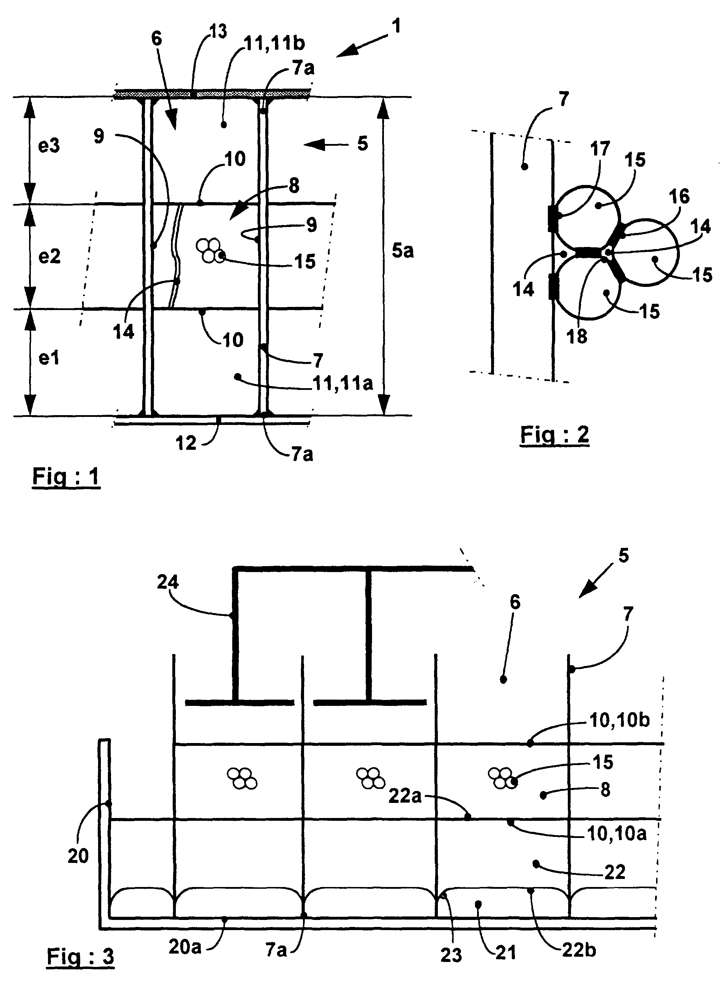

On se reportera en premier lieu à la figure 1. Le panneau insonorisant 1 est une structure stratifiée comportant en premier lieu une âme de nid d'abeille 5 constituée par des alvéoles 6 séparées par des parois 7 orientées dans le sens de l'épaisseur 5a du nid d'abeille 5 et faisant sans coupure toute l'épaisseur dudit nid d'abeille 5. Les alvéoles 6 sont ouvertes de chaque coté du nid d'abeille 5. Elles ont habituellement une section hexagonale, mais on peut admettre aussi des alvéoles ayant une section rectangulaire ou triangulaire. Les alvéoles 6 sont divisées dans le sens de l'épaisseur 5a chacune par une cloison 8 dont les bords 9 sont collés aux parois 7, lesdites cloisons 8 étant orientées perpendiculairement au sens 5a de l'épaisseur 5, lesdites cloisons 8 étant bordées de part et d'autre par des faces 10 sensiblement planes et perpendiculaires au sens de l'épaisseur 5a de l'épaisseur 5. Les cloisons 8 divisent chaque alvéole 6 en deux cavités 11 ouvertes chacune sur l'extérieur du nid d'abeille 5. Le nid d'abeille 5 est pris en sandwich entre une peau pleine 12 et une peau poreuse 13, les parois 7 étant liées par leurs extrémités 7a auxdites peaux 12,13, ce qui constitue la structure du panneau insonorisant 1 et en assure la rigidité et la résistance mécanique. On référencera 11a la cavité du fond, c'est à dire celle qui est contre la peau pleine 12. On référencera 11b la cavité d'entrée, c'est à dire celle qui est contre la peau poreuse 13. La cloison 8 est traversée de part en part par une pluralité de passages 14 mettant en communication les cavités 11a,11b, alors que la cavité d'entrée 11b est en communication avec l'extérieur du nid d'abeille 5. Ainsi, l'énergie acoustique à l'extérieur du panneau insonorisant 1 traverse la peau poreuse 13 et met en résonance les cavités 11 couplées entre elles par les passages 14 à travers la cloison 8. L'énergie est principalement dissipée par laminage visqueux de l'air passant dans la cloison 8, et dans une moindre proportion dans la peau poreuse 13.

On se reportera maintenant à la figure 2. Selon l'invention, la cloison est constituée de microbilles 15 collées entre elles par leurs points de contact 16, alors que les microbilles contre les parois 7 sont collées à ces parois 7 par leurs points de contact 17 avec lesdites parois 7. Les espaces entre les microbilles 15 constituent un réseau de passages 14 entre les faces référencées 10 sur la figure 1. Ces passages ou conduits 14 sont délimités par les surfaces 18 des microbilles 15 qui en constituent les surfaces latérales. Ces surfaces latérales 18 ont donc la forme d'un assemblage de portions de sphères géométriques convexes et tangentes, de sorte qu'elles présentent une surface importante par rapport à la section desdits passages. Une partie de l'air circulant dans les passages 14 traverse aussi les microbilles 15 qui sont creuses et dont la paroi est poreuse.

On se reportera maintenant simultanément aux figures 1 et 2. Dans cet exemple, la cavité du fond 11a a une épaisseur $e_1$ = 11mm, la cloison 8 a une épaisseur $e_2$ = 10mm et la cavité d'entrée 11b a une épaisseur $e_3$ = 10mm, soit une épaisseur totale du nid d'abeille égale à 31mm. La peau poreuse 13 et la cloison 8 ont une porosité de 22%. La cloison 8 peut être constituée de microbilles 15 tamisées dont les diamètres s'étendent de 0,2 à 1mm. Les meilleurs résultats ont été obtenus avec des microbilles tamisées dont les diamètres s'étendent de 0,3 à 0,5mm. Des résultats un peu en retrait ont été aussi obtenus avec des collections de billes de diamètres différents, soit:

   40% de diamètre 3mm + 30% de diamètre 2mm + 30% de diamètre 0,4mm,

          ainsi que:

   50% de diamètre 4mm + 30% de diamètre 2mm + 20% de diamètre 0,8mm, les billes de diamètre supérieur à 1mm étant tolérancées à plus ou moins 0,05mm, alors que les billes de diamètre inférieur à 1mm étant tolérancées par tamisage à plus ou moins 0,1mm. Les microbilles 15 peuvent être en polyamide, en céramique, en alliage métallique tel un alliage de titane, ou en élastomère.

Le liant est une résine époxy ou un élastomère dosé de 0,1 à 1g/cm3 (grammes par centimètre cubes). On comprend qu'au delà, les billes sont plus ou moins complètement enrobées de colle, ce qui a pour effet de réduire la section des passages ainsi que la porosité des microbilles. Avantageusement, la résine est dosée à au plus $0,3g/cm^3$, ce qui augmente la surface latérale des passages 14 et favorise la dissipation thermique par laminage visqueux de l'air, notamment au voisinage des points de contact 16 entre les microbilles 15.

On se reportera maintenant à la figure 3. Dans un récipient 20 à fond 20a plat et horizontal, on dépose successivement une couche d'eau 21 et une couche mince de matière cireuse à l'état liquide, ladite couche de matière cireuse pouvant être en cire, en paraffine ou tout matériau à basse température de fusion, soit entre 50°C et 85°C, mais conservant sa consistance à la température ambiante, ladite couche de matière cireuse constituant une fois solidifiée un support cireux 22. Ce support cireux 22 présente une surface de formage 22a opposée au lit d'eau 21, ainsi qu'une surface 22b contre le lit d'eau 21, c'est à dire opposée à la surface de formage 22a. Le support cireux 22 étant refroidi mais encore tendre, on presse dessus et du coté de la surface de formage 22a le nid d'abeille 5 de préférence chauffé entre 30°C et 50°C, ceci jusqu'à ce que le nid d'abeille touche le fond 20a du récipient 20, ou bien qu'il touche des butées disposées sur ledit fond 20a. La hauteur totale eau + matière cireuse est calculée pour que la surface de formage 22a atteigne la position de l'une des faces 10 de la cloison 8 à former, compte tenu de l'épaisseur des parois 7 du nid d'abeille 5. On introduit ensuite dans chaque alvéole une dose de microbilles 15 enduites de liant à l'état fluide égale au volume de la cloison 8 à former. On tasse ensuite les microbilles 15 contre la surface de formage 22a pour niveler la face 10b de la cloison 8 opposée à ladite surface de formage 22a. L'ensemble nid d'abeille 5 + support cireux 22 + microbilles 15 est ensuite retiré du récipient 20 et chauffé progressivement de façon à provoquer simultanément l'élimination du support cireux 22 et la prise progressive du liant. L'application et la liaison au nid d'abeille 5 de la peau pleine 12 et de la peau poreuse 13 sont réalisées ensuite selon les techniques habituelles compatibles avec la résistance en température des microbilles 15 et du liant.

Le lit d'eau 21 assure deux fonctions:

-   d'abord, il isole par une couche fluide la couche cireuse 22 du fond 20a du récipient 20, ce qui permet de retirer simplement l'ensemble nid d'abeille + couche cireuse du récipient 20, le support cireux 22 en couche mince flottant sur le lit d'eau 21 car étant de moindre densité que lui, le support cireux étant ainsi empêché d'adhérer au fond 20a du récipient 20,
-   ensuite, il permet la formation d'un ménisque concave 23 le long de l'angle formé par la surface 22b au contact du lit d'eau 21 et des parois 7, ce ménisque concave 23 provoquant l'expulsion par capillarité du support cireux 22 lorsque la matière cireuse le constituant commence juste à fondre et avant qu'elle n'ait pénétré par capillarité dans la cloison 8. Pour que le ménisque concave 23 puisse se former, la couche cireuse doit être en retrait d'au moins 2mm du bord 7a des parois 7. Autrement dit, le lit d'eau 21 doit pénétrer d'au moins 2mm à l'intérieur des alvéoles 6, et de préférence d'au moins 4mm, sans toutefois fragiliser la couche cireuse 22.

Le tassement des microbilles contre la surface de formage 22a peut être effectué à l'aide de pistons 24 pénétrant dans les alvéoles 6, le jeu entre les pistons 24 et les parois 7 pouvant être important tout en restant inférieur au rayon des microbilles les plus petites.

Dans une forme préférée de réalisation, car plus rapide, les microbilles pré-encollées sont étalées directement sur la surface de formage 22a, et le nid d'abeille 5 est ensuite pressé sur l'ensemble couche de microbilles + support cireux 22. Du fait que les parois 7 du nid d'abeille provoquent un refoulement des microbilles 15 en pénétrant dans la couche desdites microbilles, un tassement léger des microbilles contre la surface de formage' 22a reste utile pour niveler la face 10b de la cloison 8 opposée à ladite surface de formage 22a.

## Revendications

1. Panneau insonorisant comportant une âme de nid d'abeille (5) prise en sandwich entre une peau pleine (12) et une peau poreuse (13), ledit nid d'abeille (5) étant lié auxdites peaux (12,13), ledit nid d'abeille (5) comportant des parois (7) s'étendant dans le sens de l'épaisseur (5a) du nid d'abeilles (5) entre les deux peaux (12,13) et formant des alvéoles (6), lesdites alvéoles (6) étant divisées en deux cavités (11) dans le sens de l'épaisseur (5a) du nid d'abeille (5) par une cloison (8) dont les bords (9) arrivent au contact des parois (7), lesdits bords (9) étant liés auxdites parois (7), lesdites cloisons (8) étant traversées par des passages (14) reliant lesdites cavités (11), caractérisé en ce que les cloisons (8) sont constituées par des microbilles (15) sphériques creuses à parois poreuses en contact mutuel, lesdites microbilles (15) étant collées entre elles par leurs points de contact (16), les microbilles (15) aux bords (9) des cloisons (8) arrivant au contact des parois (7) en des points de contact (17) et étant collées audites parois (7) par ces points de contact (17), et en ce que les cloisons (8) ont une épaisseur e2 au moins égale à 15% de l'épaisseur (5a) du nid d'abeille (5).

2. Panneau insonorisant selon la revendication 1, la cloison (8) étant constituée d'un mélange de lots de microbilles (15) de diamètres homogènes, caractérisé en ce que la cloison (8) a une épaisseur e2 au moins égale à 10 fois le diamètre moyen des microbilles du lot de plus faibles diamètres.

3. Panneau insonorisant selon la revendication 1, caractérisé en ce que les microbilles (15) ont des diamètres s'étendant de 0,2 à 1mm, et en ce que la cloison (8) a une épaisseur e2 au moins égale à 10 fois le diamètre moyen des microbilles (15).

4. Procédé conçu pour réaliser un panneau insonorisant selon l'une quelconque des revendications 1 à 3, ledit procédé comportant essentiellement les opérations suivantes:

   - réaliser le nid d'abeille (5),
   - constituer un support cireux (22) présentant une surface de formage (22a) plane,
   - recouvrir la surface de formage (22a) par une couche de microbilles (15) enduites du liant à l'état fluide, l'épaisseur de ladite couche de microbilles (15) étant celle des cloisons (8) à obtenir, lesdites microbilles (15) étant creuses et à parois poreuses, lesdites microbilles (15) étant au préalable enduites d'un liant de viscosité dynamique de 0,5 à 3 Pa.s à 25°C,
   - presser le nid d'abeille (5) sur la couche de microbilles (15) et le support cireux (22) jusqu'à ce que la couche de microbilles (15) arrive à la position des cloisons (8) à l'intérieur des alvéoles (6),
   - faire prendre le liant au moins partiellement,
   - éliminer le support cireux,
   - appliquer et lier une peau pleine (12) sur l'une des faces du nid d'abeille (5),
   - appliquer et lier une peau poreuse (13) sur l'autre face du nid d'abeille (5).

5. Procédé selon la revendication 4, ledit panneau insonorisant étant courbe, caractérisé en ce que:

   - les microbilles (15) sont en élastomère,
   - on réalise les cloisons (8) dans les alvéoles (6) du nid d'abeille (5) à plat,
   - le nid d'abeille (5) est ensuite cintré à la forme à obtenir, ceci après la prise du liant et préalablement à l'application et à la liaison des peaux (12,13) sur le nid d'abeille (5).

6. Procédé selon la revendication 4, ledit panneau insonorisant étant courbe, caractérisé en ce que:

   - le liant est de l'élastomère,
   - le nid d'abeille (5) est cintré à la forme à obtenir, ceci après la prise du liant et préalablement à l'application et à la liaison des peaux (12,13) sur le nid d'abeille (5).

7. Procédé selon la revendication 4, 5 ou 6, le support cireux comportant une surface (22b) opposée à sa surface de formage (22a) caractérisé en ce que support cireux (22) est disposé par ladite surface opposée (22b) sur un lit d'eau (21), en ce que le support cireux (22) est traversé complètement par le nid d'abeille (5) lors du pressage, et en ce que le support cireux (22) arrive en retrait d'au moins 2mm à l'intérieur du nid d'abeille (5), afin de constituer un ménisque concave (23) le long de l'angle formé par les parois (7) et la surface (22b) de la couche cireuse (22) opposée à la surface de formage (22a).

8. Procédé conçu pour réaliser un panneau insonorisant selon l'une quelconque des revendications 1 à 3, ledit procédé comportant essentiellement les opérations suivantes:

- réaliser le nid d'abeille (5),
- constituer un support cireux (22) présentant une surface de formage (22a) plane,
- presser le nid d'abeille (5) sur le support cireux (22) du coté de la surface de formage (22a) jusqu'à ce que ladite surface de formage (22a) arrive à la position d'une face (10) des cloisons (8) dans les alvéoles (6),
- introduire dans chaque alvéole (6) un volume de microbilles (15) enduites du liant à l'état fluide, ce volume étant égal au volume de la cloison (8) à former, lesdites microbilles (15) étant creuses et à parois poreuses, lesdites microbilles (15) étant au préalable enduites d'un liant de viscosité dynamique de 0,5 à 3 Pa.s à 25°C,
- tasser les microbilles (15) enduites de liant,
- faire prendre le liant au moins partiellement,
- éliminer le support cireux,
- appliquer et lier une peau pleine (12) sur l'une des faces du nid d'abeille (5),
- appliquer et lier une peau poreuse (13) sur l'autre face du nid d'abeille (5).

9. Procédé selon la revendication 8, ledit panneau insonorisant étant courbe, caractérisé en ce que:

- les microbilles (15) sont en élastomère,
- on réalise les cloisons (8) dans les alvéoles (6) du nid d'abeille (5) à plat,
- le nid d'abeille (5) est ensuite cintré à la forme à obtenir, ceci après la prise du liant et préalablement à l'application et à la liaison des peaux (12,13) sur le nid d'abeille (5).

10. Procédé selon la revendication 8, ledit panneau insonorisant étant courbe, caractérisé en ce que:

- le liant est de l'élastomère,
- le nid d'abeille (5) est cintré à la forme à obtenir, ceci après la prise du liant et préalablement à l'application et à la liaison des peaux (12,13) sur le nid d'abeille (5).

11. Procédé selon la revendication 8, 9 ou 10, le support cireux comportant une surface (22b) opposée à sa surface de formage (22a) caractérisé en ce que support cireux (22) est disposé par ladite surface opposée (22b) sur un lit d'eau (21), en ce que le support cireux (22) est traversé complètement par le nid d'abeille (5) lors du pressage, et en ce que le support cireux (22) arrive en retrait d'au moins 2mm à l'intérieur du nid d'abeille (5), afin de constituer un ménisque concave (23) le long de l'angle formé par les parois (7) du nid d'abeilles (5) et la surface (22b) de la couche cireuse (22) opposée à la surface de formage (22a).

**Patentansprüche**

1. Schalldämpfungsplatte mit einem wabenförmigen Kern (5), der sich in Sandwich-Anordnung zwischen einer Vollhaut (12) und einer porösenHaut (13) befindet, wobei diese Wabe (5) mit diesen Häuten (12, 13) verbunden ist, wobei diese Wabe (5) Wände (7) aufweist, die sich in der Richtung der Dicke (5a) der Wabe (5) zwischen den beiden Häuten (12, 13) erstrecken und Zellen (6) bilden, wobei diese Zellen (6) durch eine Trennwand (8), deren Endkanten (9) bis zu den Wände (7) reichen, in der Richtung der Dicke (5a) der Wabe (5) in zwei Hohlräume (11) unterteilt wird, wobei diese Endkanten (9) mit diesen Wände (7) verbunden sind, wobei durch diese Trennwände (8) hindurch Durchlässe (14) verlaufen, die diese Hohlräume (11) miteinander verbinden,

dadurch gekennzeichnet, dass die Trennwände (8) von kugelförmigen, hohlen Mikrokügelchen (15) mit porösen Wänden gebildet werden, die in Kontakt miteinander sind, wobei diese Mikrokügelchen (15) an ihren Berührungsstellen (16) aneinander festgeklebt sind, wobei die Mikrokügelchen (15) an den Endkanten (9) der Trennwände (8) mit Berührungsstellen (17) in Kontakt mit den Wänden (7) kommen und mit diesen Berührungsstellen (17) an diesen Wänden (7) festgeklebt sind, und dass die Trennwände (8) eine Dicke e2 haben, die mindestens 15 % der Dicke (5a) der Wabe (5) beträgt.

2. Schalldämpfungsplatte nach Anspruch 1, wobei die Trennwand (8) aus einem Füllungsgemisch von Mikrokügelchen (15) mit homogenen Durchmessern besteht, dadurch gekennzeichnet, dass die Trennwand (8) eine Dicke e2 hat, die mindestens das 10-fache des durchschnittlichen Durchmessers der Mikrokügelchen der Füllung mit den geringsten Durchmessern beträgt.

3. Schalldämpfungsplatte nach Anspruch 1, dadurch gekennzeichnet, dass die Mikrokügelchen (15) Durchmesser von 0,2 bis 1 mm aufweisen, und dass die Trennwand (8) eine Dicke e2 hat, die mindestens das 10-fache des durchschnittlichen Durchmessers der Mikrokügelchen (15) beträgt.

4.  Verfahren zur Herstellung einer Schalldämpfungsplatte nach einem der Ansprüche 1 bis 3, im wesentlichen aus den folgenden Arbeitsschritten bestehend:

    -   Herstellen der Wabe (5),
    -   Bilden eines weichen Trägers (22) mit einer ebenen Formungsfläche (22a),
    -   die Formungsfläche (22a) mit einer Schicht Mikrokügelchen (15) bedecken, die mit dem Bindemittel in flüssigem Zustand überzogen sind, wobei die Dicke dieser Schicht Mikrokügelchen (15) der herzustellenden Dicke der Trennwände (8) entspricht, wobei diese Mikrokügelchen (15) hohl sind und poröse Wände haben, wobei diese Mikrokügelchen (15) zuvor mit einem Bindemittel mit einer dynamischen Viskosität von 0,5 bis 3 Pa.s bei 25 °C überzogen werden,
    -   die Wabe (5) auf die Schicht Mikrokügelchen (15) und den weichen Träger (22) aufpressen, bis die Schicht Mikrokügelchen (15) sich im Inneren der Zellen (6) in der Position der Trennwände (8) befindet,
    -   das Bindemittel zumindest teilweise abbinden lassen,
    -   den weichen Träger (22) entfernen,
    -   eine Vollhaut (12) auf eine Seite der Wabe (5) aufbringen,
    -   eine poröse Haut (13) auf die andere Seite der Wabe (5) aufbringen.

5.  Herstellungsverfahren nach Anspruch 4, wobei die Schalldämpfungsplatte gekrümmt ist, **dadurch gekennzeichnet, dass**

    -   die Mikrokügelchen (15) aus einem Elastomer bestehen,
    -   die Trennwände (8) in den Zellen (6) der flachen Wabe (5) hergestellt werden,
    -   die Wabe (5) sodann in die Form gebogen wird, die sie annehmen soll, und zwar nach dem Abbinden des Bindemittels und vor dem Aufbringen und Verbinden der Häute (12, 13) auf der Wabe (5).

6.  Herstellungsverfahren nach Anspruch 4, wobei die Schalldämpfungsplatte gekrümmt ist, **dadurch gekennzeichnet, dass**

    -   das Bindemittel aus einem Elastomer besteht,
    -   die Wabe (5) in die Form gebogen wird, die sie annehmen soll, und zwar nach dem Abbinden des Bindemittels und vor dem Aufbringen und Verbinden der Häute (12, 13) auf der Wabe (5).

7.  Herstellungsverfahren nach Anspruch 4, 5 oder 6, wobei der weiche Träger (22) eine Fläche (22b) aufweist, die seiner Formungsfläche (22a) gegenüber liegt, **dadurch gekennzeichnet, dass** der weiche Träger (22) mit dieser gegenüberligenden Fläche (22b) auf einem Wasserbett (21) angeordnet ist, dass der weiche Träger (22) beim Pressen vollkommen von der Wabe (5) durchdrungen wird, und dass der weiche Träger (22) im Inneren der Wabe (5) um mindestens 2 mm zurückweicht, so dass entlang des Winkels, den die Wände (7) mit der der Formungsfläche (22a) gegenüber liegenden Fläche (22b) der weichen Schicht (22) bilden, eine konkave Sichelform entsteht.

8.  Verfahren zur Herstellung einer Schalldämpfungsplatte nach einem der Ansprüche 1 bis 3, im wesentlichen aus den folgenden Arbeitsschritten bestehend:

    -   Herstellen der Wabe (5),
    -   Bilden eines weichen Trägers (22) mit einer ebenen Formungsfläche (22a),
    -   die Wabe (5) auf der Seite der Formungsfläche (22a) auf den weichen Träger (22) aufpressen, bis diese Formungsfläche (22a) sich in der Position einer Seite (10) der Trennwände (8) in den Zellen (6) befindet,
    -   in jede Zelle (6) ein Volumen Mikrokügelchen (15) einführen, die mit dem Bindemittel in flüssigem Zustand überzogen sind, wobei dieses Volumen gleich dem Volumen der zu bildenden Trennwand (8) ist, wobei diese Mikrokügelchen (15) hohl sind und poröse Wände haben, wobei diese Mikrokügelchen (15) zuvor mit einem Bindemittel mit einer dynamischen Viskosität von 0,5 bis 3 Pa.s bei 25 °C überzogen werden,
    -   die mit Bindemittel überzogenen Mikrokügelchen (15) aufhäufen,
    -   das Bindemittel zumindest teilweise abbinden lassen,
    -   den weichen Träger (22) entfernen,
    -   eine Vollhaut (12) auf eine Seite der Wabe (5) aufbringen,
    -   eine poröse Haut (13) auf die andere Seite der Wabe (5) aufbringen.

9.  Herstellungsverfahren nach Anspruch 8, wobei die Schalldämpfungsplatte gekrümmt ist, **dadurch gekennzeichnet, dass**

    -   die Mikrokügelchen (15) aus einem Elastomer bestehen,
    -   die Trennwände (8) in den Zellen (6) der flachen Wabe (5) hergestellt werden,
    -   die Wabe (5) sodann in die Form gebogen wird, die sie annehmen soll, und zwar nach dem Abbinden des Bindemittels und vor dem Aufbringen und Verbinden der Häute (12, 13) auf der Wabe (5).

**10.** Herstellungsverfahren nach Anspruch 8, wobei die Schalldämpfungsplatte gekrümmt ist, **dadurch gekennzeichnet, dass**

- das Bindemittle aus einem Elastomer besteht,
- die Wabe (5) in die Form gebogen wird, die sie annehmen soll, und zwar nach dem Abbinden des Bindemittels und vor dem Aufbringen und Verbinden der Häute (12, 13) auf der Wabe (5).

**11.** Herstellungsverfahren nach Anspruch 8, 9 oder 10, wobei der weiche Träger (22) eine Fläche (22b) aufweist, die seiner Formungsfläche (22a) gegenüber liegt, **dadurch gekennzeichnet, dass** der weiche Träger (22) mit dieser gegenüberliegenden Fläche (22b) auf einem Wasserbett (21) angeordnet ist, dass der weiche Träger (22) beim Pressen vollkommen von der Wabe (5) durchdrungen wird, und dass der weiche Träger (22) im Inneren der Wabe (5) um mindestens 2 mm zurückweicht, so dass entlang des Winkels, den die Wände (7) der Wabe (5) mit der der Formungsfläche (22a) gegenüber liegenden Fläche (22b) der weichen Schicht (22) bilden, eine konkave Sichelform entsteht.

**Claims**

**1.** Soundproofing panel comprising a honeycomb core (5) sandwiched between a solid skin (12) and a porous skin (13), said honeycomb (5) being bonded to said skins (12, 13), said honeycomb (5) comprising walls (7) extending in the direction of the thickness (5a) of the honeycomb (5) between the two skins (12, 13) and forming cells (6), said cells (6) being divided into two cavities (11) in the direction of the thickness (5a) of the honeycomb (5) by a partition (8) whose edges (9) come into contact with the walls (7), said edges (9) being bonded to said walls (7), said partitions (8) being traversed by passages (14) linking said cavities (11), characterized in that the partitions (8) are constructed of hollow spherical microbeads (15) with porous walls in mutual contact, said microbeads (15) being glued together via their points of contact (16), the microbeads (15) at the edges (9) of the partitions (8) coming into contact with the walls (7) at points of contact (17) and being glued to said walls (7) via these points of contact (17), and in that the partitions (8) have a thickness e2 at least equal to 15% of the thickness (5a) of the honeycomb (5).

**2.** Soundproofing panel according to Claim 1, the partition (8) being constructed of a mixture of batches of microbeads (15) of homogeneous diameters, characterized in that the partition (8) has a thickness e2 at least equal to 10 times the mean diameter of the microbeads of the batch of smallest diameters.

**3.** Soundproofing panel according to Claim 1, characterized in that the microbeads (15) have diameters ranging from 0.2 to 1 mm, and in that the partition (8) has a thickness e2 at least equal to 10 times the mean diameter of the microbeads (15).

**4.** Process designed for producing a soundproofing panel according. to any one of Claims 1 to 3, said process essentially comprising the following operations:

- producing the honeycomb (5),
- constructing a waxy support (22) exhibiting a plane forming surface (22a),
- covering the forming surface (22a) with a layer of microbeads (15) coated with the binder in the fluid state, the thickness of said layer of microbeads (15) being that of the partitions (8) to be obtained, said microbeads (15) being hollow and having porous walls, said microbeads (15) being previously coated with a binder having a dynamic viscosity of from 0.5 to 3 Pa.s at 25°C,
- pressing the honeycomb (5) onto the layer of microbeads (15) and the waxy support (22) until the layer of microbeads (15) reaches the position of the partitions (8) inside the cells (6),
- causing the binder to set at least partially,
- removing the waxy support,
- applying and bonding a solid skin (12) onto one of the faces of the honeycomb (5),
- applying and bonding a porous skin (13) onto the other face of the honeycomb (5).

**5.** Process according to Claim 4, said soundproofing panel being curved, characterized in that:

- the microbeads (15) are made of elastomer,
- the partitions (8) are produced in the cells (6) of the honeycomb (5) whilst flat,
- the honeycomb (5) is then arched to the shape to be obtained, doing so after the setting of the binder and prior to the application and bonding of the skins (12, 13) to the honeycomb (5).

**6.** Process according to Claim 4, said soundproofing panel being curved, characterized in that:

- the binder is elastomer,
- the honeycomb. (5) is arched to the shape to be obtained, doing so after the setting of the binder and prior to the application and bonding of the skins (12, 13) to the honeycomb (5).

**7.** Process according to Claim 4, 5 or 6, the waxy support comprising a surface (22b) opposite its forming surface (22a), characterized in that the waxy support (22) is disposed via said opposite surface (22b) on a bed of water (21), in that the waxy support (22) is completely traversed by the honeycomb (5) during the pressing, and in that the waxy support (22) stands back by at least 2 mm inside the honeycomb (5), so as to construct a concave meniscus (23) along the corner formed by the walls (7) and the surface (22b) of the waxy layer (22) opposite the forming surface (22a).

8. Process designed for producing a soundproofing panel according to any one of Claims 1 to 3, said process essentially comprising the following operations:

   - producing the honeycomb (15),
   - constructing a waxy support (22) exhibiting a plane forming surface (22a),
   - pressing the honeycomb (5) onto the waxy support (22) on the side of the forming surface (22a) until said forming surface (22a) reaches the position of a face (10) of the partitions (8) in the cells (6),
   - introducing a volume of microbeads (15) coated with the binder in the fluid state into each cell (6), this volume being equal to the volume of the partition (8) to be formed, said microbeads (15) being hollow and having porous walls, the microbeads (15) being previously coated with a binder having a dynamic viscosity of from 0.5 to 3 Pa.s at 25°C,
   - packing the binder-coated microbeads (15),
   - causing the binder to set at least partially,
   - removing the waxy support,
   - applying and bonding a solid skin (12) onto one of the faces of the honeycomb (5),
   - applying and bonding a porous skin (13) onto the other face of the honeycomb (5).

9. Process according to Claim 8, said soundproofing panel being curved, characterized in that:

   - the microbeads (15) are made of elastomer,
   - the partitions (8) are produced in the cells (6) of the honeycomb (5) whilst flat,
   - the honeycomb (5) is then arched to the shape to be obtained, doing so after the setting of the binder and prior to the application and bonding of the skins (12, 13) to the honeycomb (5).

10. Process according to Claim 8, said soundproofing panel being curved, characterized in that:

   - the binder is elastomer,
   - the honeycomb (5) is arched to the shape to be obtained, doing so after the setting of the binder and prior to the application and bonding of the skins (12, 13) to the honeycomb (5).

11. Process according to Claim 8, 9 or 10, the waxy support comprising a surface (22b) opposite its forming surface (22a), characterized in that the waxy support (22) is disposed via said opposite surface (22b) on a bed of water (21), in that the waxy support (22) is completely traversed by the honeycomb (5) during the pressing, and in that the waxy support (22) stands back by at least 2 mm inside the honeycomb (5), so as to construct a concave meniscus (23) along the corner formed by the walls (7) of the honeycomb (5) and the surface (22b) of the waxy layer (22) opposite the forming surface (22a).

Fig : 1

Fig : 2

Fig : 3